# FASCICULE DE BREVET EUROPEEN

(11) **EP 4 045 287 B1**
(45) Date de publication et mention de la délivrance du brevet: **28.06.2023**
(21) Numéro de dépôt: 20789145.8
(22) Date de dépôt: 13.10.2020
(51) Int. Cl.: B29C 51/16, B29C 51/08, B29C 51/42, B29L 31/30, B29K 309/08, B29K 307/04, B29K 69/00, B29K 27/06, B29K 55/02, B29K 81/00

(54) **PROCEDE DE FABRICATION D'UNE PIECE FINIE**
VERFAHREN ZUR HERSTELLUNG EINES FERTIGTEILS
METHOD FOR MANUFACTURING A FINISHED PART

(30) Priorité: 16.10.2019 FR 1911520
(43) Date de publication de la demande: 24.08.2022
(73) Titulaire: Safran Seats, 78370 Plaisir (FR)
(72) Inventeur: MEYER, Thomas, 77550 Moissy-Cramayel (FR); EXERTIER, Agnès, 77550 Moissy-Cramayel (FR); THOBIE, Pascal, 77550 Moissy-Cramayel (FR); CAILLETEAU, Jérémy, 77550 Moissy-Cramayel (FR)
(74) Mandataire: Marconnet, Sébastien
(86) Numéro de dépôt international: PCT/EP2020/078710
(87) Numéro de publication internationale: WO 2021/074115

(56) Documents cités:
- FR-A1- 2 840 246
- FR-B1- 2 840 246
- US-A- 6 136 415
- US-A1- 2018 345 570

## Description

La présente invention porte sur un procédé de fabrication d'une pièce finie. L'invention trouve une application particulièrement avantageuse, mais non exclusive, pour les pièces de sièges d'avion destinés aux classes affaires ou aux classes économiques, telles que les capots d'accoudoirs.

Un capot d'accoudoir peut être réalisé par un procédé d'estampage d'une pièce structurelle réalisée dans un matériau composite. La finition peut ensuite être réalisée au cours d'une étape manuelle d'ajout d'une coque de couleur et de texture souhaitées, ce qui induit une fabrication longue et coûteuse des pièces.

Par ailleurs, certains procédés permettent de recouvrir une pièce structurelle d'un film de finition. Toutefois, ce film très fin (de l'ordre de 0.2mm) a tendance à se froisser et n'est donc pas adapté à des pièces de formes complexes, comme peuvent l'être les capots d'accoudoirs. Le document FR2840246 A1 décrit un procédépour mettre en forme et renforcer une pièce de matière thermoplastique comprenant successivement les étapes suivantes: a) chauffer une pièce de matière thermoplastique en forme générale de plaque, b) placer ladite pièce ainsi chauffée sur un moule, une première face étant destinée à être positionnée contre les parois de l'empreinte du moule et thermoformer la pièce; c) sur au moins une partie de la deuxième grande face de la pièce ainsi thermoformée, appliquer un renfort préalablement chauffé, d) sur le renfort, appliquer un contre-moule avec une pression suffisante pour assurer la mise en forme du renfort et son soudage avec la pièce thermoformée, e) l'ensemble pièce thermoformée/renfort maintenu entre le moule et le contre-moule est refroidi. Le document US6136415 A décrit un composant de garniture intérieure tel qu'un tableau de bord de véhicule comprenant un substrat sensiblement rigide et stable à la forme de polypropylène et de fibres naturelles, un squelette halogéné de support et d'autres composants de cadre thermosoudés sur un côté arrière du substrat. Le document US2018/345570 A1 décrit un article thermoformé comprenant une couche de base structurelle autoportante, un revêtement appliqué sur un premier côté de la couche de base, et un ou plusieurs éléments secondaires co-injectés sur un second côté de la couche de base.

L'invention vise à remédier efficacement à ces inconvénients en proposant un procédé de fabrication d'une pièce finie selon la revendication 1.

L'invention permet ainsi, en disposant la coque de finition dans le moule de mise en forme de la pièce structurelle, d'obtenir en une seule et même opération une pièce finie. L'invention permet ainsi de réduire la durée de fabrication de la pièce finie sans impacter son procédé de réalisation par estampage. L'invention permet également d'adapter la finition de la pièce (couleur ou texture de la coque de finition) en fonction de la géométrie de la pièce structurelle. L'invention permet en outre, grâce au préchauffage de la pièce structurelle, d'obtenir une bonne adhésion entre la pièce structurelle et la coque de finition.

Selon une mise en oeuvre, ledit procédé comporte en outre une étape d'injection de plastique lors de l'étape d'estampage de façon à former une bordure et/ou des nervures sur la pièce structurelle.

Selon une mise en oeuvre, le matériau plastique de la coque de finition, le matériau composite de la pièce structurelle et le matériau plastique injecté sont réalisés à partir d'un matériau plastique de même nature.

Selon une mise en oeuvre, le matériau plastique de la coque de finition, le matériau composite de la pièce structurelle et le matériau plastique injecté sont à base de polycarbonate, PVC ("Polychlorure de vinyle"), PPS (polysulfure de phénylène) ou ABS ("Acrylonitrile Butadiène Styrène").

Selon une mise en oeuvre, la coque de finition est réalisée par thermoformage ou thermocompression et détourée.

Selon une mise en oeuvre, la coque de finition est réalisée par thermoformage ou thermocompression directement sur le moule femelle ou le moule mâle.

Selon une mise en oeuvre, le chauffage de la pièce structurelle est effectué au moyen d'un four à infra-rouges.

Selon une mise en oeuvre, une température du moule dans lequel est disposé la coque de finition est inférieure à la température de fusion du matériau composite de la pièce structurelle.

Selon une mise en oeuvre, la pièce structurelle est formée à partir de plusieurs couches de matériau composite empilées les unes sur les autres.

Selon une mise en oeuvre, la coque de finition présente une épaisseur comprise entre 0.5mm et 1.2mm, et valant de préférence de l'ordre de 1mm.

Selon une mise en oeuvre, la pièce structurelle présente une épaisseur comprise entre 1 mm et 3mm et valant de préférence de l'ordre de 2.5mm.

Selon une mise en oeuvre, la pièce finie est une pièce de siège d'avion structurelle et décorative telle qu'une portion d'un accoudoir, un capot vidéo, un dossier, une tablette repas.

L'invention concerne en outre une pièce finie obtenue avec le procédé tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1a] [Fig. 1b] [Fig. 1c] Les figures 1a à 1c illustrent les différentes étapes du procédé de thermoformage selon l'invention permettant d'obtenir une coque de finition réalisée dans un matériau plastique;
[Fig. 2a] [Fig. 2b] [Fig. 2c] [Fig. 2d] [Fig. 2e] Les figures 2a à 2e illustrent les différentes étapes du procédé d'estampage selon l'invention permettant d'obtenir une pièce finie à partir d'une coque de finition et d'une pièce structurelle;
[Fig. 3] La figure 3 est une vue en coupe détaillée illustrant la zone d'interface entre le matériau composite de la pièce structurelle et le matériau plastique de la coque de finition;
[Fig. 4] La figure 4 est une vue en perspective d'un accoudoir comportant un capot obtenu par la mise en oeuvre du procédé d'estampage selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

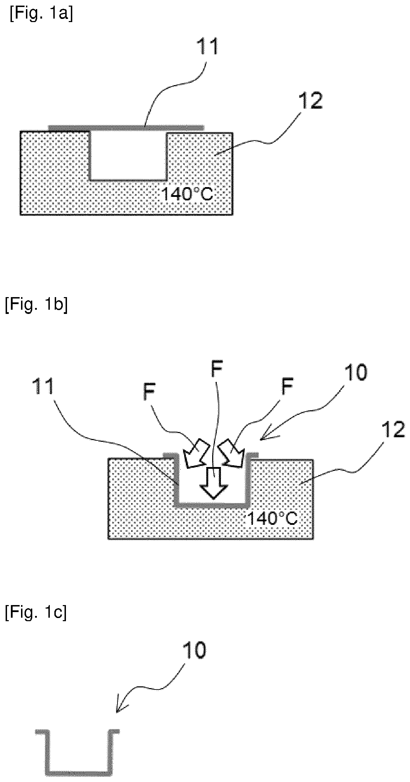

Les figures 1a à 1c montrent les étapes permettant de réaliser une coque de finition 10. A cet effet, une plaque 11 réalisée dans un matériau plastique, notamment en polycarbonate, est chauffée à une température comprise entre 180°C et 230°C, notamment de l'ordre de 200°C. Afin de pouvoir réaliser des formes complexes, la plaque 11 présente une épaisseur comprise entre 0.5mm et 1.2mm, et valant de préférence de l'ordre de 1mm. Par "de l'ordre de", on entend une variation possible de plus ou moins 10% autour de la valeur indiquée.

La plaque 11 chauffée est mise en position à l'intérieur d'un moule 12 par un opérateur ou au moyen d'un robot, tel que cela est montré sur la figure 1a. La température du moule 12 est inférieure à celle de la plaque 11 chauffée. La température du moule 12 est par exemple comprise entre 90°C et 150°C et vaut de préférence de l'ordre de 140°C.

La plaque 11 chauffée est ensuite mise en forme par thermoformage ou thermocompression sous pression ou sous vide. Dans le cas d'une phase de thermoformage sous pression, une cage de volume d'air sous pression disposée au-dessus du moule 12 applique des forces de pression F sur la plaque 11 de façon à déformer la plaque 11 pour lui faire épouser les parois du moule 12, tel que cela est illustré par la figure 1b. Dans le cas d'une phase de thermoformage sous vide, les forces de pression F sont créées par une source de dépression et des trous réalisés dans le moule 12. La pression appliquée sur la plaque 11 est par exemple comprise entre 1 et 6 bars. La phase de thermoformage dure par exemple de l'ordre d'une minute.

A l'issue de la phase de thermoformage, on obtient une plaque 11 ayant une forme externe rectangulaire correspondant à la forme du moule 12.

On effectue ensuite une étape de détourage de la plaque 11 mise en forme par thermoformage. Cette étape de détourage est une opération d'usinage suivant laquelle la plaque 11 mise en forme est maintenue sur un conformateur et est découpée suivant sa périphérie extérieure. L'étape de détourage pourra par exemple être effectuée à l'aide d'une fraise d'usinage 5 axes ou de tout autre outil de découpe adapté à l'application.

A l'issue de l'étape de détourage, on obtient une coque de finition 10 visible sur la figure 1c. La coque de finition 10 est destinée à assurer la finition d'une face interne ou externe d'une pièce finie 13. La pièce finie 13 pourra être par exemple une pièce d'un siège d'avion.

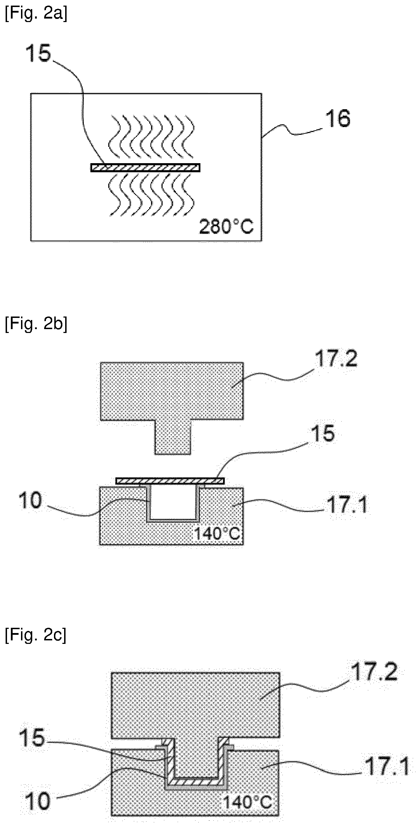

On décrit, en référence avec les figures 2a à 2e, le procédé de fabrication de la pièce finie 13 à partir de la coque de finition 10 détourée et d'une pièce structurelle 15.

La pièce structurelle 15 est formée à partir de plusieurs couches de matériau composite empilées les unes sur les autres. Les couches de matériau composite pourront être liées mécaniquement entre elles par des points de soudure réalisés notamment par ultrasons.

Les fibres, par exemple des fibres de verre ou de carbone, pourront présenter des orientations différentes d'une couche de matériau à l'autre afin d'optimiser la tenue mécanique de l'ensemble. La pièce structurelle 15 présente une épaisseur comprise entre 1 mm et 3mm et valant de préférence de l'ordre de 2.5mm.

La pièce structurelle 15 est chauffée à l'intérieur d'un four 16 jusqu'à sa température de fusion, tel que cela est illustré par la figure 2a. La température de fusion dépend du matériau utilisé et est par exemple comprise entre 250°C et 300°C. Dans l'exemple représenté, la température de fusion du matériau plastique utilisé est de l'ordre de 280°C.

Le chauffage de la pièce structurelle 15 est effectué de préférence au moyen d'un four 16 à infra-rouges. La durée de la phase de chauffage pourra par exemple être de l'ordre de 2 minutes.

La coque de finition détourée 10 est préalablement mise en place à l'intérieur d'un premier moule 17.1 qui est chauffé. Le premier moule 17.1 dit "moule femelle" présente une forme complémentaire d'un deuxième moule 17.2 dit "moule mâle" en forme de poinçon.

Comme cela est illustré par la figure 2b, une fois que la pièce structurelle 15 a atteint sa température de fusion, un opérateur ou un robot assure une dépose de la pièce structurelle 15 sur la coque de finition 10.

Comme cela est illustré par la figure 2c, la pièce structurelle 15 est mise en forme contre la coque de finition 10 au moyen du moule mâle 17.2 en forme de poinçon coopérant, dans un état fermé, avec le moule femelle 17.1, de telle façon que la coque de finition 10 se solidarise avec la pièce structurelle 15 mise en forme pour obtenir une pièce finie 13. L'estampage permet d'assurer un bon compactage du matériau composite, de sorte que l'on conserve les qualités mécaniques de la pièce structurelle 15 malgré l'ajout de la coque de finition 10.

La température du moule femelle 17.1 est inférieure à la température de fusion du matériau composite de la pièce structurelle 15, afin de favoriser le refroidissement de la pièce finie 13. La température du moule femelle 17.1 est par exemple comprise entre 90°C et 150°C et vaut de préférence de l'ordre de 140°C.

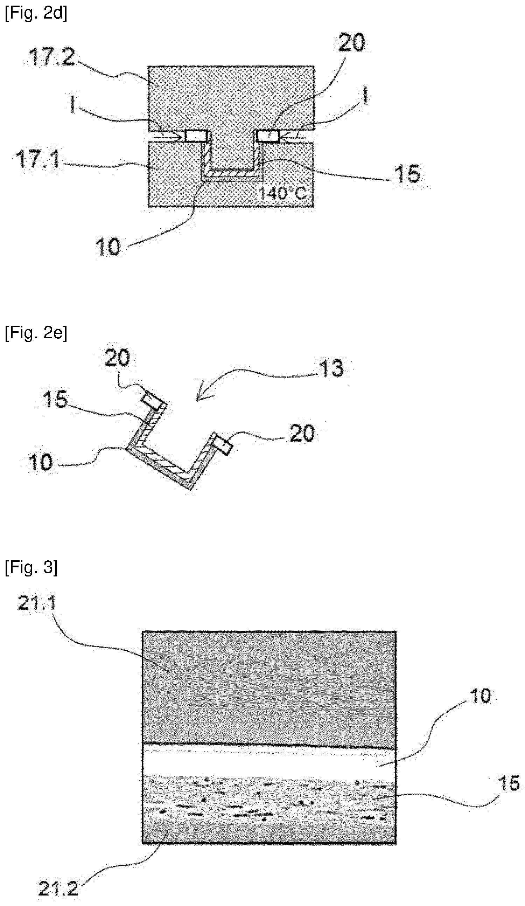

Comme cela est illustré par la figure 2d, le procédé pourra comporter également une étape d'injection de plastique, suivant les flèches I, lors de l'étape d'estampage de façon à former une bordure et/ou des nervures 20 sur la pièce structurelle 15. Autrement dit, l'étape d'injection de plastique pourra se produire lorsque le moule mâle 17.2 est à l'état fermé. Le plastique est injecté entre le moule femelle 17.1 et le moule mâle 17.2. La durée de fermeture du moule mâle 17.2 est par exemple de l'ordre de 90 secondes (cela inclut la phase d'injection).

Comme cela est illustré par la figure 2e, la pièce finie 13 est éjectée à l'issu de l'étape d'injection.

Avantageusement, le matériau plastique de la coque de finition 10, le matériau composite de la pièce structurelle 15, et le matériau plastique injecté sont réalisés à partir d'un matériau plastique de même nature, notamment à base d'un même matériau. Cette adéquation entre les matériaux utilisés permet d'optimiser l'adhésion au niveau des interfaces de liaison entre les différentes pièces assemblées.

Le matériau plastique de la coque de finition 10, le matériau composite de la pièce structurelle 15, et le matériau plastique injecté sont en l'occurrence à base de polycarbonate. En variante, il est possible d'utiliser un autre type de plastique, tel que du PVC (acronyme pour "Polychlorure de vinyle"), PPS (polysulfure de phénylène) ou ABS (acronyme pour "Acrylonitrile Butadiène Styrène"), ou tout autre matériau plastique adapté à l'application.

Il est à noter que la coque de finition 10 et la pièce structurelle 15 peuvent être réalisées de façon indépendante l'une de l'autre. Ainsi, les coques de finition 10 pourront être réalisées sur une autre chaîne de fabrication avant d'être utilisées pour la fabrication de la pièce finie 13. Autrement dit, la coque de finition 10 disposée à l'intérieur du moule 17.1 au début du procédé est une pièce préalablement mise en forme et refroidie. La durée de réalisation des coques de finition 10 n'a donc pas d'impact sur la durée de réalisation de la pièce finie 13.

La figure 3 montre une coupe transversale de la pièce finie 13 qui est noyée entre deux couches de résines 21.1, 21.2 afin de faciliter la découpe du matériau pris en sandwich entre ces deux couches 21.1, 21.2. Cette figure met en évidence la bonne adhésion entre le matériau composite de la pièce structurelle 15 et le matériau plastique de la coque de finition 10.

Cette adhésion entre les matériaux est favorisée par le chauffage de la pièce structurelle 15 et la coque de finition 10 avant la phase d'estampage ainsi que par l'adéquation entre les matériaux plastiques choisis qui sont de même nature.

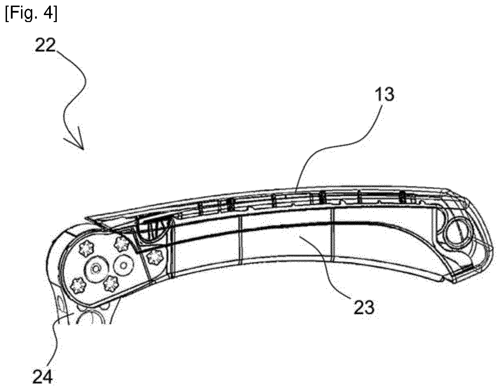

Comme cela est illustré par la figure 4, la pièce finie 13 pourra être une portion d'un accoudoir 22 de forme complexe disposé autour d'une autre portion 23 de l'accoudoir 22. La pièce finie 13 n'a pas seulement une fonction esthétique dans la mesure où elle a également une fonction mécanique de reprise et de transmission d'efforts. La portion 23 de l'accoudoir 22 est monté rotative par rapport à une crosse 24 d'un siège. Le siège pourra être un siège multiplaces de type économique ou un siège de type business.

En variante, la pièce finie 13 est une autre pièce de siège d'avion structurelle et décorative telle qu'un capot vidéo, un dossier, une tablette repas, ou autre.

Le procédé a été réalisé avec un positionnement de la coque de finition 10 sur le moule femelle 17.1. Alternativement, la coque de finition 10 peut être positionnée sur le moule mâle 17.2 dans le cas où la finition porte sur une face interne de la pièce finie 13. Une coque de finition 10 peut également être positionnée sur le moule femelle 17.1 et le moule mâle 17.2 dans le cas où la finition porte sur une face interne et une face externe de la pièce finie 13.

En variante, la coque de finition 10 est réalisée par thermoformage ou thermocompression directement sur le moule femelle 17.1 ou le moule mâle 17.2.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Procédé de fabrication d'une pièce finie (13), **caractérisé en ce qu'**il comporte:
- une étape de réalisation d'une coque de finition (10) d'une face interne ou externe de la pièce finie (13), ladite coque de finition (10) étant en matériau plastique,
- une étape de détourage de la coque de finition (10),
- une étape de mise en place de la coque de finition (10) détourée à l'intérieur d'un moule chauffé choisi parmi un premier moule (17.1) dit moule femelle et un deuxième moule (17.2) dit moule mâle en forme de poinçon, ledit moule femelle (17.1) ayant une forme complémentaire de celle du moule mâle (17.2),
- une étape de chauffage d'une pièce structurelle (15) réalisée dans un matériau composite jusqu'à sa température de fusion,
- une étape de dépose de la pièce structurelle (15) sur la coque de finition (10),
- une étape de mise en forme de la pièce structurelle (15) contre la coque de finition (10) au moyen du moule mâle (17.2) en forme de poinçon coopérant avec le moule femelle (17.1), de telle façon que la coque de finition (10) se solidarise avec la pièce structurelle (15) mise en forme pour obtenir la pièce finie (13).

2. Procédé selon la revendication 1, **caractérisé en ce qu'**il comporte en outre une étape d'injection de plastique lors de l'étape d'estampage de façon à former une bordure et/ou des nervures (20) sur la pièce structurelle (15).

3. Procédé selon la revendication 2, **caractérisé en ce que** le matériau plastique de la coque de finition (10), le matériau composite de la pièce structurelle (15) et le matériau plastique injecté sont réalisés à partir d'un matériau plastique de même nature.

4. Procédé selon la revendication 3, **caractérisé en ce que** le matériau plastique de la coque de finition (10), le matériau composite de la pièce structurelle (15) et le matériau plastique injecté sont à base de polycarbonate, PVC ("Polychlorure de vinyle"), PPS (polysulfure de phénylène) ou ABS ("Acrylonitrile Butadiène Styrène").

5. Procédé selon l'une quelconque des revendications 1 à 4, **caractérisé en ce que** la coque de finition (10) est réalisée par thermoformage ou thermocompression et détourée.

6. Procédé selon la revendication 5, **caractérisé en ce que** la coque de finition (10) est réalisée par thermoformage ou thermocompression directement sur le moule femelle (17.1) ou le moule mâle (17.2).

7. Procédé selon l'une quelconque des revendications 1 à 6, **caractérisé en ce que** le chauffage de la pièce structurelle (15) est effectué au moyen d'un four (16) à infra-rouges.

8. Procédé selon l'une quelconque des revendications 1 à 7, **caractérisé en ce qu'**une température du moule dans lequel est disposé la coque de finition (10) est inférieure à la température de fusion du matériau composite de la pièce structurelle (15).

9. Procédé selon l'une quelconque des revendications 1 à 8, **caractérisé en ce que** la pièce structurelle (15) est formée à partir de plusieurs couches de matériau composite empilées les unes sur les autres.

10. Procédé selon l'une quelconque des revendications 1 à 9, **caractérisé en ce que** la coque de finition (10) présente une épaisseur comprise entre 0.5mm et 1.2mm, et valant de préférence de l'ordre de 1mm.

11. Procédé selon l'une quelconque des revendications 1 à 10, **caractérisé en ce que** la pièce structurelle (15) présente une épaisseur comprise entre 1mm et 3mm et valant de préférence de l'ordre de 2.5mm.

12. Procédé selon l'une quelconque des revendications 1 à 11, **caractérisé en ce que** la pièce finie (13) est une pièce de siège d'avion structurelle et décorative telle qu'une portion d'un accoudoir (22), un capot vidéo, un dossier, une tablette repas.

## Patentansprüche

1. Verfahren zur Herstellung eines gefertigten Teils (13), **dadurch gekennzeichnet, dass** es umfasst:
- einen Schritt zur Herstellung einer Fertigungsschale (10) einer Innen- oder Außenseite des gefertigten Teils (13), wobei die Fertigungsschale (10) aus Kunststoffmaterial besteht,
- einen Schritt des Trimmens der Fertigungsschale (10),
- einen Schritt des Platzierens der gefrästen Fertigungsschale (10) in einer erhitzten Form, ausgewählt aus einer ersten Form (17.1), sogenannter Matrize, und einer zweiten Form (17.2), sogenannter Patrize, in der Form eines Stempels, wobei die Matrize (17.1) eine Form hat, die komplementär zu der der Patrize (17.2) ist,
- einen Schritt des Erhitzens eines Strukturteils (15) aus einem Verbundwerkstoff auf seine Schmelztemperatur,
- einen Schritt des Ablegens des Strukturteils (15) auf der Fertigungsschale (10),
- einen Schritt des Formens des Strukturteils (15) gegen die Fertigungsschale (10) mittels der Patrize (17.2) in Form eines Stempels, der mit der Matrize (17.1) zusammenwirkt, so dass die Fertigungsschale (10) mit dem Strukturteil (15) zum gefertigten Teil (13) verbindet.

2. Verfahren nach Anspruch 1, **dadurch gekennzeichnet, dass** es ferner einen Kunststoffeinspritzschritt während des Prägeschritts umfasst, um einen Rand und/oder Rippen (20) an dem Strukturteil (15) zu bilden.

3. Verfahren nach Anspruch 2, **dadurch gekennzeichnet, dass** das Kunststoffmaterial der Fertigungsschale (10), das Verbundmaterial des Strukturteils (15) und das eingespritzte Kunststoffmaterial aus einem artgleichen Kunststoffmaterial bestehen.

4. Verfahren nach Anspruch 3, **dadurch gekennzeichnet, dass** das Kunststoffmaterial der Fertigungsschale (10), das Verbundmaterial des Strukturteils (15) und das eingespritzte Kunststoffmaterial auf Basis von Polycarbonat, PVC ("Polyvinylchlorid"), PPS (Polyphenylensulfid) oder ABS ("Acrylnitril-Butadien-Styrol") sind.

5. Verfahren nach einem der Ansprüche 1 bis 4, **dadurch gekennzeichnet, dass** die Fertigungsschale (10) durch Thermoformen oder Thermokompression hergestellt und gefräst wird.

6. Verfahren nach Anspruch 5, **dadurch gekennzeichnet, dass** die Fertigungsschale (10) durch Thermoformen oder Thermokompression direkt auf der Matrize (17.1) oder der Patrize (17.2) hergestellt wird.

7. Verfahren nach einem der Ansprüche 1 bis 6, **dadurch gekennzeichnet, dass** die Erwärmung des Strukturteils (15) mittels eines Infrarotofens (16) erfolgt.

8. Verfahren nach einem der Ansprüche 1 bis 7, **dadurch gekennzeichnet, dass** eine Temperatur der Form, in die die Fertigungsschale (10) eingelegt wird, niedriger als die Schmelztemperatur des Verbundmaterials des Strukturteils (15) ist.

9. Verfahren nach einem der Ansprüche 1 bis 8, **dadurch gekennzeichnet, dass** das Strukturteil (15) aus mehreren übereinander gestapelten Lagen von Verbundmaterial gebildet wird.

10. Verfahren nach einem der Ansprüche 1 bis 9, **dadurch gekennzeichnet, dass** die Fertigungsschale (10) eine Dicke zwischen 0,5mm und 1,2mm und vorzugsweise in der Größenordnung von 1mm hat.

11. Verfahren nach einem der Ansprüche 1 bis 10, **dadurch gekennzeichnet, dass** das Strukturteil (15) eine Dicke zwischen 1mm und 3mm und vorzugsweise in der Größenordnung von 2,5mm hat.

12. Verfahren nach einem der Ansprüche 1 bis 11, **dadurch gekennzeichnet, dass** das gefertigte Teil (13) ein strukturelles und dekoratives Flugzeugsitzteil wie ein Abschnitt einer Armlehne (22), eine Videoabdeckung, eine Sitzlehne, eine Sitzplatte zum Essen.

## Claims

1. Method for manufacturing a finished part (13), **characterized in that** it comprises:
- a step of producing a finishing shell (10) of an internal or external face of the finished part (13), said finishing shell (10) being made of plastic material,
- a step of trimming the finishing shell (10),
- a step of placing the trimmed finishing shell (10) into a heated mold chosen from among a first mold (17.1), so-called female mold, and a second mold (17.2), so-called male mold, in the shape of a punch, said female mold (17.1) having a shape complementary to that of the male mold (17.2),
- a step of heating a structural part (15) made of a composite material up to its melting temperature,
- a step of depositing the structural part (15) onto the finishing shell (10),
- a step of shaping the structural part (15) against the finishing shell (10) by means of the male mold (17.2) in the shape of a punch cooperating with the female mold (17.1), so that the finishing shell (10) joins with the shaped structural part (15) to obtain the finished part (13).

2. Method according to Claim 1, **characterized in that** it further comprises a plastic injection step during the stamping step so as to form a border and/or ribs (20) on the structural part (15).

3. Method according to Claim 2, **characterized in that** the plastic material of the finishing shell (10), the composite material of the structural part (15) and the injected plastic material are made from a plastic material of the same nature.

4. Method according to Claim 3, **characterized in that** the plastic material of the finishing shell (10), the composite material of the structural part (15) and the injected plastic material are based on polycarbonate, PVC ("Polyvinyl Chloride"), PPS (Polyphenylene Sulfide) or ABS ("Acrylonitrile Butadiene Styrene".

5. Method according to any one of the claims 1 to 4, **characterized in that** the finishing shell (10) is produced by thermoforming or thermocompression and trimmed.

6. Method according to Claim 5, **characterized in that** the finishing shell (10) is produced by thermoforming or thermocompression directly on the female mold (17.1) or the male mold (17.2).

7. Method according to any one of the claims 1 to 6, **characterized in that** the heating of the structural part (15) is carried out by means of an infra-red oven (16).

8. Method according to any one of the claims 1 to 7, **characterized in that** a temperature of the mold in which the finishing shell (10) is placed is lower than the melting temperature of the composite material of the structural part (15) .

9. Method according to any one of the claims 1 to 8, **characterized in that** the structural part (15) is formed from several layers of composite material stacked one on another.

10. Method according to any one of the claims 1 to 9, **characterized in that** the finishing shell (10) has a thickness between 0.5mm and 1.2mm, and preferably of the order of 1mm.

11. Method according to any one of the claims 1 to 10, **characterized in that** the structural part (15) has a thickness between 1mm and 3mm and preferably of the order of 2.5mm.

12. Method according to any one of the claims 1 to 11, **characterized in that** the finished part (13) is a structural and decorative aircraft seat part such as a portion of an armrest (22), a video cover, a back of a seat, a meal flap.
